# FASCICULE DE BREVET EUROPEEN

(11) **EP 0 486 375 B1**
(45) Date de publication et mention de la délivrance du brevet: **01.02.1995**
(21) Numéro de dépôt: 91403014.3
(22) Date de dépôt: 08.11.1991
(51) Int. Cl.: H02G 7/05

(54) **Dispositif d'ancrage pour câble électrique torsadé**
Verankerungsvorrichtung für elektrische Litzenleitung
Anchoring device for twisted electrical cable

(30) Priorité: 12.11.1990 FR 9013992
(43) Date de publication de la demande: 20.05.1992
(73) Titulaire: ETABLISSEMENTS DERANCOURT, F-66270 Le Soler (FR)
(72) Inventeur: Derancourt, Frédéric, F-66270 Le Soler (FR)
(74) Mandataire: Keib, Gérard

(56) Documents cités:
- EP-A- 0 212 643
- FR-A- 1 498 867

## Description

La présente invention concerne un dispositif d'ancrage pour câble électrique torsadé.

Les dispositifs d'ancrage connus comprennent un corps creux en matière plastique présentant un évidement axial tronconique destiné au passage du câble. Ce corps creux comporte une bride qui permet de l'accrocher à une surface telle qu'un mur.

Ces dispositifs comprennent d'autre part un noyau destiné à être engagé dans l'évidement du corps creux. Ce noyau présente une surface extérieure tronconique adaptée à celle de l'évidement du corps creux. Cette surface extérieure tronconique comporte des gorges longitudinales adaptées à recevoir chacune un brin du câble torsadé.

Ainsi, lorsque le noyau portant dans ses gorges les brins du câble est engagé dans l'évidement tronconique du corps creux, les brins du câble sont comprimés et coincés entre le noyau et l'évidement du corps creux. Cet effet de compression et de coincement est renforcé lorsqu'on exerce une traction sur le câble dans une direction opposée à la bride d'accrochage qui retient le corps creux.

En utilisant plusieurs dispositifs de ce type, on peut tendre un câble entre plusieurs points d'accrochage.

Dans les dispositifs d'ancrage connus EP-A-0212 643 et FR-A-1498 867, le corps creux est soit d'une seule pièce, soit réalisé en deux parties encliquetées l'une à l'autre.

Les dispositifs d'ancrage à noyau d'une seule pièce sont peu commodes à utiliser, car ces corps creux doivent être engagés à l'une des extrémités du câble.

Les dispositifs à corps creux en deux parties sont plus pratiques puisque ces deux parties peuvent être assemblées autour du câble. Cependant, les efforts de traction du câble sollicitent fortement les moyens de fixation par encliquetage des deux parties du corps creux. Ceux-ci doivent en effet résister à des efforts de cisaillement.

Le but de l'invention est de remédier aux inconvénients des réalisations connues en créant un dispositif d'ancrage de câbles torsadés qui soit à la fois commode à utiliser et qui assure une fixation sûre et fiable des câbles.

L'invention vise ainsi un dispositif d'ancrage pour câble électrique torsadé, comprenant un corps creux présentant un évidement axial tronconique destiné au passage du câble, des moyens pour l'accrocher à une paroi ou analogue, un noyau présentant une surface extérieure tronconique qui comporte des gorges longitudinales adaptées à recevoir chacune un brin du câble torsadé, ledit noyau portant dans ses gorges les brins du câble pouvant s'engager dans l'évidement axial tronconique du corps creux, de telle sorte que les brins du câble soient comprimés entre le noyau et l'évidement du corps creux lorsqu'on exerce une traction sur le câble dans une direction opposée aux moyens d'accrochage qui retiennent le corps creux.

Suivant l'invention, ce dispositif d'ancrage est caractérisé en ce que le corps creux est constitué par deux demi-coquilles assemblées l'une à l'autre par deux nervures parallèles engagés dans des rainures complémentaires prévues sur les bords opposés des demi-coquilles et permettant de fixer par coulissement relatif les deux demi-coquilles l'une à l'autre.

Ce mode d'assemblage des demi-coquilles par coulissement relatif dans des rainures et nervures complémentaires permet de faciliter la fixation mutuelle des deux demi-coquilles de part et d'autre du câble.

De plus, grâce à ce mode d'assemblage, les deux demi-coquilles sont reliées l'une à l'autre pratiquement sur toute leur longueur ce qui permet au corps creux de résister à des efforts de tension du câble très élevés.

De plus, le mode d'assemblage des deux demi-coquilles permet de renforcer l'effet de coincement du câble relativement au noyau.

Selon une version préférée de l'invention, le coulissement relatif des deux demi-coquilles est limité par des butées prévues sur chacune des demi-coquilles.

Ces deux butées encaissent des efforts de tension du câble très élevés.

D'autres particularités et avantages de l'invention, apparaîtront encore dans la description ci-après.

Aux dessins annexés, donnés à titre d'exemples non limitatifs :
- la figure 1 est une vue éclatée, en perspective du dispositif d'ancrage conforme à l'invention,
- la figure 2 est une vue en bout du corps creux du dispositif, du côté du plus grand diamètre,
- la figure 3 est une vue en plan avec arrachement du dispositif d'ancrage, montrant le câble et l'accrochage du dispositif à un mur.

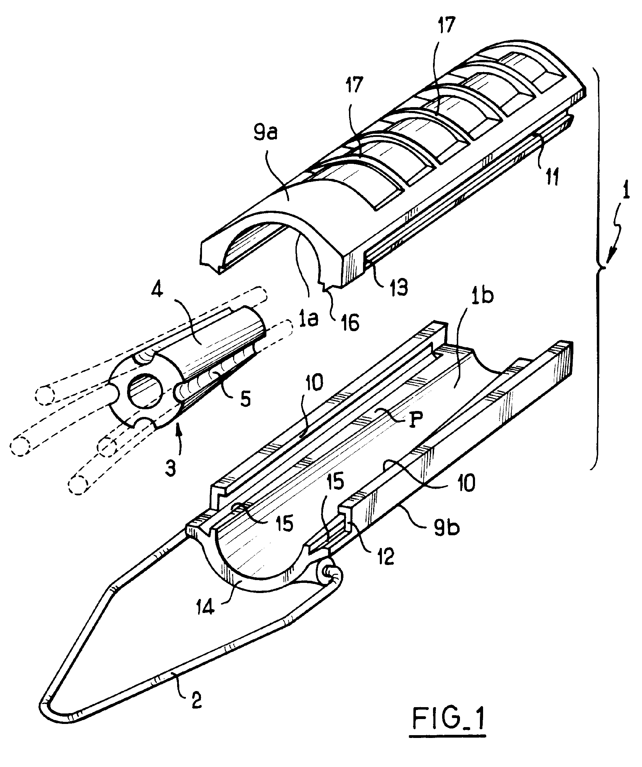

Dans la réalisation de la figure 1, le dispositif d'ancrage pour câble électrique torsadé comprend un corps creux 1 présentant un évidement axial tronconique 1a, 1b destiné au passage du câble, une bride 2 pour l'accrocher à une paroi ou analogue et un noyau 3 présentant une surface extérieure tronconique 4 qui comporte des gorges longitudinales 5 hélicoïdales adaptées à recevoir chacune un brin du câble torsadé.

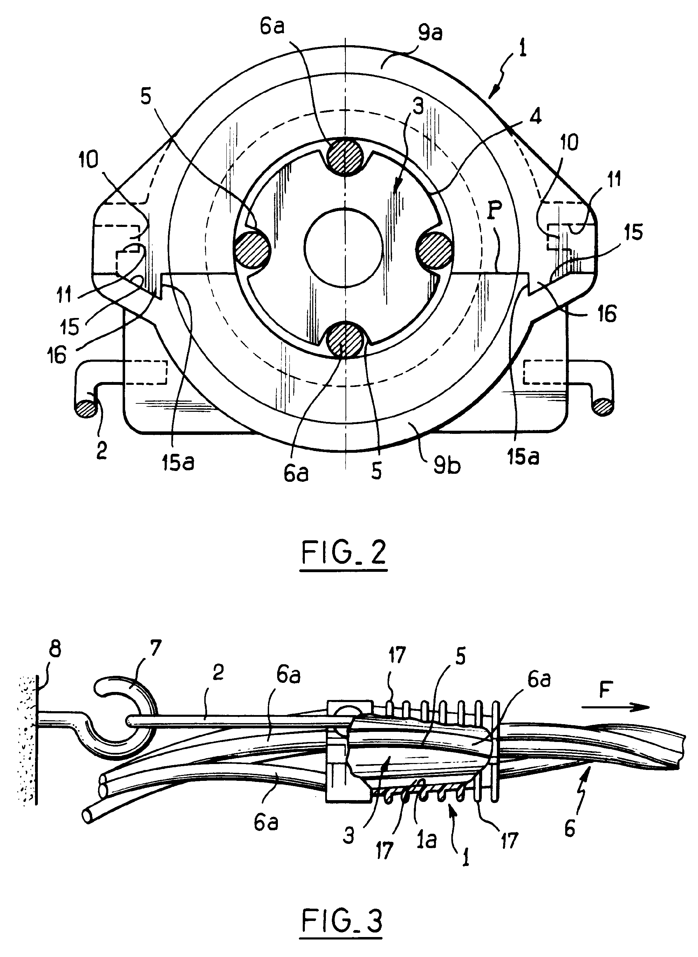

Comme indiqué sur la figure 3 le noyau 3 portant dans ses gorges 5 les brins 6a du câble 6 s'engage dans l'évidement axial tronconique 1a, 1b du corps creux 1, de telle sorte que les brins 6a du câble 6 soient comprimés entre le noyau 3 et l'évidement 1a, 1b du cors creux 1 en exerçant une traction sur le câble 6 dans une direction F opposée à la bride 2 qui retient le corps creux 1 au crochet 7 fixé dans le mur 8.

Conformément à l'invention (voir figures 1 et 2), le corps creux 1 est constitué par deux demi-coquilles 9a, 9b assemblées l'une à l'autre par deux nervures parallèles 10 engagées dans des rainures complémentaires 11 prévues sur les bords opposés des demi-coquilles 9a, 9b et permettant de fixer par coulissement relatif les deux demi-coquilles l'une à l'autre.

On voit également sur la figure 1 que le coulissement relatif des deux demi-coquilles 9a, 9b est limité par des butées 12, 13 prévues sur chacun des bords longitudinaux des demi-coquilles 9a, 9b.

La demi-coquille 9b comporte à son extrémité 14 adjacente au plus grand diamètre de l'évidement tronconique 1b, une bride 2 pour accrocher le corps creux 1 à une surface telle qu'un mur 8. Les butées 12, 13 sont ménagées près de cette extrémité 14 et interdisent lorsqu'elles sont en appui, le coulissement de l'autre demi-coquille 9a dans une direction opposée à ladite extrémité 14.

On voit sur la figure 2, que la demi-coquille 9b présente sur chacun de ses bords longitudinaux opposés une nervure 10 faisant saillie radialement vers l'intérieur de la demi-coquille. Cette nervure 10 est engagée dans une rainure 11 complémentaire de l'autre demi-coquille 9a. Sous chaque nervure 10 est ménagée une gorge 15 délimitée par deux flancs dans laquelle est engagée une saillie 16 de forme complémentaire de l'autre demi-coquille 9b.

Le flanc 15a de la gorge 15 adjacente à l'intérieur de la demi-coquille 9b est sensiblement perpendiculaire au plan P de jonction entre les deux demi-coquilles 9a, 9b.

L'autre flanc de la gorge 15 est incliné vers l'intérieur par rapport audit plan de jonction P et forme avec le flanc 15a un dièdre saillant vers le bas.

La figure 1 montre d'autre part que les butées 12, 13 sont constituées par des surfaces d'appui perpendiculaires aux nervures 10 et rainures 11 de coulissement.

De préférence, mais non limitativement, les demi-coquilles 1a, 1b et le noyau tronconique 3 sont moulés en polyamide chargé de poudre de verre, ce qui leur assure une grande résistance mécanique.

Par ailleurs, les figures 1 et 3, montrent que la surface extérieure des demi-coquilles 1a, 1b présente des nervures radiales 17, qui permettent d'économiser la matière plastique, tout en assurant aux demi-coquilles une excellente résistance aux contraintes radiales.

De plus, ces nervures 17 assurent une bonne prise manuelle lors de l'assemblage des deux demi-coquilles 1a, 1b.

Pour accrocher un câble électrique torsadé 6 à un mur 8 au moyen du dispositif d'ancrage que l'on vient de décrire, on procède comme suit.

Tout d'abord on glisse le noyau 3 à l'intérieur de la torsade du câble 6, ce que l'on réalise en écartant les quatre brins 6a et en engageant ceux-ci dans les gorges 5 du noyau 3.

On place ensuite les deux demi-coquilles 9a, 9b de part et d'autre du câble 6. On engage les nervures 10 de la demi-coquille 9b dans les rainures 11 de la demi-coquille 9b et on fait coulisser ces deux demi-coquilles l'une vers l'autre jusqu'à ce que les butées 12, 13 viennent en contact l'une avec l'autre.

On glisse ensuite le noyau 3 pris entre les brins 6a du câble dans l'évidement tronconique 1a, 1b du corps creux 1 formé par les deux demi-coquilles, en engageant la petite base du noyau tronconique 3 dans la grande base de l'évidement tronconique du corps creux.

On fixe alors l'étrier 2 du corps creux 1 au crochet 7 scellé dans le mur 8.

En tirant sur le câble 6 dans le sens F de la figure 3, le noyau 3 s'engage davantage dans l'évidement tronconique 1a, 1b du corps creux 1, du fait que la demi-coquille 9b soit retenue par l'étrier 2 et que le coulissement des demi-coquilles soit empêché par les butées 12, 13.

Ainsi, la traction exercée sur le câble 6, a pour effet de renforcer le coincement des brins du câble 6 entre le noyau 3 et le corps creux 1.

La traction exercée par le câble engendre deux efforts : un effort de dilatation radiale qui est pris en compte par les rainures 11 et les nervures 10 engagées l'une dans l'autre ainsi que par la gorge 15 et la saillie 16 ; un effort longitudinal qui est pris en compte par les butées 12, 13 qui limitent le coulissement des deux demi-coquilles.

## Revendications

1. Dispositif d'ancrage pour câble électrique (6) torsadé, comprenant un corps creux (1) présentant un évidement axial tronconique (1a, 1b) destiné au passage du câble (6), des moyens (2) pour l'accrocher à une paroi ou analogue, un noyau (3) présentant une surface extérieure (4) tronconique qui comporte des gorges longitudinales (5) adaptées à recevoir chacune un brin (6a) du câble torsadé (6), ledit noyau (3) portant dans ses gorges (5) les brins du câble, pouvant s'engager dans l'évidement axial tronconique (1a, 1b) du corps creux (1), de telle sorte que les brins (6a) du câble (6) soient comprimés entre le noyau (3) et l'évidement du corps creux (1) lorsqu'on exerce une traction sur le câble (6) dans une direction opposée aux moyens d'accrochage (2) qui retiennent le corps creux, caractérisé en ce que le corps creux (1) est constitué par deux demi-coquilles (9a, 9b) assemblées l'une à l'autre par deux nervures parallèles (10) engagées dans des rainures complémentaires (11) prévues sur les bords opposés des demi-coquilles et permettant de fixer par coulissement relatif les deux demi-coquilles (9a, 9b) l'une à l'autre.

2. Dispositif conforme à la revendication 1, caractérisé en ce que le coulissement relatif des deux demi-coquilles (9a, 9b) est limité par des butées (12, 13) prévues sur chacune des demi-coquilles.

3. Dispositif conforme à la revendication 2, caractérisé en ce que l'une des demi-coquilles (9a, 9b) comporte à son extrémité (14) adjacente au plus grand diamètre de l'évidement tronconique (1a, 1b), une bride (2) pour accrocher le corps creux (1) à une surface telle qu'un mur, les butées (12, 13) étant ménagées près de cette extrémité (14) et interdisant lorsqu'elles sont en appui, le coulissement de l'autre demi-coquille (9a, 9b) dans une direction opposée à ladite extrémité (14).

4. Dispositif conforme à l'une des revendications 1 à 3, caractérisé en ce que l'une des deux demi-coquilles (9a, 9b) présente sur chacun de ses bords longitudinaux opposés une nervure (10) faisant saillie radialement vers l'intérieur de la demi-coquille, cette nervure (10) étant engagée dans une rainure complémentaire (11) de l'autre demi-coquille, en ce que sous chaque nervure (10) est ménagée une gorge (15) délimitée par deux flancs dans laquelle est engagée une saillie (16) de forme complémentaire de l'autre demi-coquille.

5. Dispositif conforme à la revendication 4, caractérisé en ce que le flanc (15a) de la gorge (15) adjacente à l'intérieur de la demi-coquille (9b) est sensiblement perpendiculaire au plan (P) de jonction entre les deux demi-coquille (9a, 9b) tandis que l'autre flanc est incliné vers l'intérieur par rapport audit plan de jonction (P).

6. Dispositif conforme à l'une des revendications 1 à 5, caractérisé en ce que lesdites butées (12, 13) sont constituées par des surfaces d'appui perpendiculaires aux nervures (10) et rainures (11) de coulissement.

7. Dispositif conforme à l'une des revendications 1 à 6, caractérisé en ce que les demi-coquilles (9a, 9b) et le noyau tronconique (3) sont en polyamide chargé de poudre de verre.

8. Dispositif conforme à l'une des revendications 1 à 7, caractérisé en ce que la surface extérieure des demi-coquilles (9a, 9b) présente des nervures radiales (17).

## Patentansprüche

1. Vorrichtung zum Verankern eines verdrillten elektrischen Kabels (6), mit einem Hohlkörper (1), der einen axialen, kegelstumpfartigen Hohlraum (1a, 1b) aufweist, der zum Hindurchführen des Kabels (6) bestimmt ist, Mitteln (2) zu ihrem Aufhängen an einer Wand oder ähnlichem, einem Kern (3), der eine kegelstumpfartige Außenfläche (4) aufweist, die jeweils zum Aufnehmen einer Ader (6a) des verdrillten Kabels (6) geeignete Längsrillen (5) aufweist, wobei der Kern (3), der in seinen Rillen (5) die Adern des Kabels trägt, in den axialen, kegelstumpfartigen Hohlraum (1a, 1b) des Hohlkörpers (1) so eindringen kann, daß die Adern (6a) des Kabels (6) zwischen dem Kern (3) und dem Hohlraum des Hohlkörpers (1) zusammengedrückt werden, wenn auf das Kabel (6) in einer den den Hohlkörper haltenden Aufhängemitteln (2) entgegengesetzten Richtung ein Zug ausgeübt wird, dadurch gekennzeichnet, daß der Hohlkörper (1) aus zwei Halbschalen (9a, 9b) gebildet ist, die durch zwei parallele Rippen (10) zusammengefügt sind, die in komplementäre, an den gegenüberliegenden Rändern der Halbschalen vorgesehene Nuten (11) eingreifen, die ermöglichen, die zwei Halbschalen (9a, 9b) durch relatives Verschieben zu befestigen.

2. Vorrichtung nach Anspruch 1, dadurch gekennzeichnet, daß das relative Verschieben der zwei Halbschalen (9a, 9b) durch an jeder der Halbschalen angebrachte Anschläge (12, 13) begrenzt ist.

3. Vorrichtung nach Anspruch 2, dadurch gekennzeichnet, daß eine der Halbschalen (9a, 9b) an ihrem dem größten Durchmesser des kegelstumpfartigen Hohlraums (1a, 1b) angrenzenden Ende (14) einen Bügel (2) zum Aufhängen des Hohlkörpers (1) an einer Fläche wie einer Wand enthält, wobei die Anschläge (12, 13) nahe dieses Endes (14) angebracht sind und dann, wenn sie in Anlage sind, das Verschieben der anderen Halbschale (9a, 9b) in einer diesem Ende (14) entgegengesetzten Richtung unterbinden.

4. Vorrichtung nach einem der Ansprüche 1 bis 3, dadurch gekennzeichnet, daß eine der zwei Halbschalen (9a, 9b) an jedem ihrer gegenüberliegenden Längsränder eine radial zum Inneren der Halbschale hin vorstehende Rippe (10) aufweist, wobei diese Rippe (10) in eine Komplementäre Nut (11) der anderen Halbschale eingreift, daß unter jeder Rippe (10) eine von zwei Flanken begrenzte Auskehlung (15) angebracht ist, in die ein Vorsprung(16) der anderen Halbschale mit komplementärer Form eingreift.

5. Vorrichtung nach Anspruch 4, dadurch gekennzeichnet, daß die Flanke (15a) der Auskehlung (15), die an das Innere der Halbschale (9b) angrenzt, im wesentlichen senkrecht zur Verbindungsebene (P) zwischen den zwei Halbschalen (9a, 9b) verläuft, während die andere Flanke gegen das Innere schräg bezüglich der Verbindungsebene (P) verläuft.

6. Vorrichtung nach einem der Ansprüche 1 bis 5, dadurch gekennzeichnet, daß die Anschläge (12, 13) von Anschlagflächen gebildet sind, die senkrecht zu den Rippen (10) und den Verschiebenuten (11) verlaufen.

7. Vorrichtung nach einem der Ansprüche 1 bis 6, dadurch gekennzeichnet, daß die Halbschalen (9a, 9b) und der kegelstumpfartige Kern (3) aus mit Glaspulver verstärktem Polyamid bestehen.

8. Vorrichtung nach einem der Ansprüche 1 bis 7, dadurch gekennzeichnet, daß die Außenfläche der Halbschalen (9a, 9b) radiale Nuten (17) aufweist.

## Claims

1. An anchoring device for a twisted electrical cable (6), comprising a hollow member (1) having a frusto-conical axial cavity (1a, 1b) intended for the passage of the cable (6), means (2) for securing it to a wall or the like, a core (3) having an outer frustoconical surface (4) comprising longitudinal grooves (5) adapted each to receive a strand (6a) of the twisted cable (6), said core (3) carrying the cable strands in its grooves (5) being adapted to engage in the frustoconical axial cavity (1a, 1b) of the hollow member (1) in such manner that the strands (6a) of the cable (6) are compressed between the core (3) and the cavity of the hollow member (1) when traction is applied to the cable (6) in a direction opposed to the securing means (2) retaining the hollow member, characterised in that the hollow member (1) is formed by two halves (9a, 9b) interconnected by two parallel ribs (10) engaging in matching grooves (11) formed on the opposite edges of the halves and enabling the two halves (9a, 9b) to be fixed to one another by relative sliding thereof.

2. A device according to claim 1, characterised in that the relative sliding of the two halves (9a, 9b) is limited by stops (12, 13) provided on each of the halves.

3. A device according to claim 2, characterised in that at its end (14) adjacent the largest diameter of the frustoconical cavity (1a, 1b) one of the halves (9a, 9b) has a clip (2) for securing the hollow member (1) to a surface such as a wall, the stops (12, 13) being provided near said end (14) and, when in contact, preventing sliding of the other half (9a, 9b) in the opposite direction to said end (14).

4. A device according to any one of claims 1 to 3, characterised in that one of the two halves (9a, 9b) has on each of its opposite longitudinal edges a rib (10) projecting radially towards the interior of the half, said rib (10) being engaged in a complementary groove (11) in the other half, and in that beneath each rib (10) there is formed a groove (15) defined by two flanks and in which there is engaged a projection (16) of complementary shape on the other half.

5. A device according to claim 4, characterised in that the flank (15a) of the groove (15) adjacent the interior of the half (9b) is substantially perpendicular to the junction plane (P) between the two halves (9a, 9b) while the other flank is inclined inwardly relatively to said junction plane (P).

6. A device according to any one of claims 1 to 5, characterised in that the said stops (12, 13) are formed by abutment surfaces perpendicular to the ribs (10) and sliding grooves (11).

7. A device according to any one of claims 1 to 6, characterised in that the halves (9a, 9b) and the frustoconical core (3) are made of polyamide having a glass powder filling.

8. A device according to any one of claims 1 to 7, characterised in that the outer surface of the halves (9a, 9b) has radial ribs (17).
